# EUROPEAN PATENT APPLICATION

(11) **EP 1 413 415 A1**
(43) Date of publication of application: **28.04.2004**
(21) Application number: 02755731.3
(22) Date of filing: 31.07.2002
(51) Int. Cl.: B29B 15/08, B29K 307/04

(54) **COMPOSITE MATERIAL−USE FIBER BASE MATERIAL**

(30) Priority: 02.08.2001 JP 2001235029; 24.07.2002 JP 2002215357
(71) Applicant: Mitsubishi Heavy Industries, Ltd., Tokyo 100-0005 (JP); Shikibo Ltd., Osaka-shi, Osaka 541-0051 (JP)
(72) Inventor: ABE, Toshio, Nagoya-shi, Aichi 455-0024 (JP); NISHIYAMA, Shigeru, Nagoya-shi, Aichi 455-0024 (JP); SHINYA, Masahiro, Nagoya-shi, Aichi 455-0024 (JP); FUKUOKA, Toshiyasu, Nagoya-shi, Aichi 455-0024 (JP); ISHIBASHI, Masayasu, Osaka-shi, Osaka 541-0051 (JP); HASHIMOTO, Koichi, Osaka-shi, Osaka 541-0051 (JP); TANAMURA, Takeshi, Osaka-shi, Osaka 541-0051 (JP); SAKONJO, Hideki, Osaka-shi, Osaka 541-0051 (JP); HIROKAWA, Tetsuro, Osaka-shi, Osaka 541-0051 (JP)
(74) Representative: Cabinet HERRBURGER
(86) International application number: PCT/JP2002/007825
(87) International publication number: WO 2003/013817

(57) **Abstract**

The present invention provides a fiber base material for constituting a composite material for increasing interlaminar strength (peeling strength, out-of-plane strength, post-impact strength), improving impregnation efficiency of a matrix in a composing process and preventing a resin-rich portion that affects the strength. A fiber base material for constituting a composite material comprising a single layer or a plurality of layers of a solid-shape base material constituted of a woven or knitted continuous fiber, wherein the base material is raised for enhancing interlaminar or bonding plane strength, improving permeability of a matrix at a surface and an interior portion thereof, and increasing plane smoothness. The raising process is also applicable to a fiber base material for constituting a composite material comprising a plurality of layers including a sheet-shape base material constituted of a woven or knitted continuous fiber, or including the sheet-shape base material and the solid-shape base material. The raising process is carried out by needle-punching. When necessary, a fiber web is introduced into an interface of the fiber structure in parallel with the raising process, during the needle-punching. The surface is smoothed.

## Description

### BACKGROUND OF THE INVENTION

### 1. Field of the Invention

The present invention relates to a fiber base material for constituting a composite material, to be used for constituting a composite material provided with reinforcement of raised fiber formed by a needle-punch process or the like between base materials to upgrade its strength characteristics, applicable to a structural member of an aircraft, an aircraft sandwich panel, an aircraft skin panel, an aircraft body panel, an aircraft floor panel, a tank structure of an aircraft or a spaceship, a rudder face structure, a wing panel, a window frame, a structural member around a hole or a cutaway portion, a heat-resistant material, a soundproofing material, a joint material and other purposes.

### 2. Description of the Related Art

A fiber base material for constituting a composite material currently employed for such purposes is generally constituted of a plurality of layers including a fibriform, sheet-shape or solid-shape base material to achieve a predetermined thickness or shape, and is finished through impregnation of a matrix and dry curing, or through impregnation and sintering.

A fiber structure constituted of a three-dimensional pile interlace formed by needle-punching a staple fiber web, a filament fiber web and various other base materials is known in the art. Such fiber structure has been used mainly for ornamental purposes such as an interior surface material or a carpet of various transportation media including automobiles, trains, ships and aircrafts etc., and also as a hygroscopic material employed in civil work materials, diapers and sanitary items and so forth. For such purposes, appearance design, hygroscopic property, soundproofing capability etc. have been considered to be the key factors, while stress performance, which is essential to a structural material, has not been specifically focused on. Meanwhile, fiber base materials for constituting a composite material that are formed through weaving, stitching, knitting, or braiding a continuous fiber have been developed for use under a heavy load for performing complicated load propagation, and studies for practical utilization of such materials are being carried out. A reinforcing fiber in these fiber structures only exists in a form of a bundle intersection in a three-dimensional structure of a continuous fiber, and there is no binding structure in an interface between the bundles. The interface between the bundles is so to say a gap or an interlayer space where a fiber does not exist, therefore constitutes a resin-rich region upon finishing a resin impregnating process. Consequently, such structure has a drawback that when a load is imposed thereon a microcrack is caused in the resin-rich region or interlayer space, which leads to strength degradation or breakdown of the material. Referring to a composite material in general, it is known that its strength drastically declines in a resin-rich region where a fiber is not contained. Accordingly, such drawback considerably restricts the degree of freedom in selection and configuration of materials in a designing stage.

Also, among composite materials currently available, an interface between an inner core material and an outer skin material of a sandwich panel is sustained merely by adhesion strength of a resin, which is significantly inferior to strength of a fiber (JP-A No.2000-238154). In addition a material combined by a stitch or a pin is also known as seen in USP No.6,187,411 or No.6,027,798, however its interlaminar strength cannot be considered sufficient as a structural material since such material can only have a low-density binding structure between the layers.

Besides, in case of a conventional fiber structure for constituting a composite material in which a cutaway section or a hole is formed, when a heavy load is imposed from different directions the cutaway section or the hole is prone to produce a crack at a border portion thereof because of insufficient bonding strength between the layers of the base material, which often leads to breakdown.

Also referring to a bonding plane between a skin panel and a stiffener or a stringer of a conventional composite material, sufficient strength has not yet been achieved between the fibers or between the layers, despite the studies carried out so far on a method of bonding with a resin (including a thermoplastic powder), which only has a far inferior breaking strength to that of a fiber, or with a low-density fiber stitch.

Further, in case of such structural material as represented by a girder material having an irregular cross-section such as an I-shape or a T-shape constituted of a woven, knitted or braided fiber base material, which generally has a gap between a flange portion and a web portion thereof because of the manufacturing process, conventionally for example a prepreg-type material made from a filler consisting of the same material as the fiber base material and formed in the same cross-sectional shape as the gap is inserted into the gap, before resin impregnation and composition process. Alternatively, a gap in such material is fixed by stitching or knitting, and then the material is impregnated with a resin and composed (USP No.4,331,723, No.4,256,790). However, since these materials either do not have any binding structure at an interface of the base materials or are only stitched or knitted with a fiber at a large interval, the mentioned materials do not have sufficient strength to be used as an aircraft structural material and are prone to produce a crack when a load or impact of a certain level is imposed thereon. Interlaminar strength and compression after impact are especially critical aspects to a material that has to perform complicated load propagation in response to heavy loads imposed thereon from different directions, such as an aircraft structural material, however a conventional fiber structure does not have sufficient strength since an interlacing fiber is barely or not provided at all between fibers or between base material layers of a conventional material, as already stated.

Also, for the purpose of cost reduction a large-diameter fiber constituted of thicker monofilament fibers or of an increased number of assembled yarns has come to be more popularly used, therefore a protruding portion of a thread loop formed at a thread interlacing point on a surface of a fiber base material becomes higher, by which a recess formed on the same surface or on an adjacent bonding plane becomes as much deeper, and resultantly more amount of matrix is deposited in the recess than in other portions of the fiber base material upon carrying out an impregnation of the matrix in a composition process.

Accordingly, it is an object of the present invention to provide a low-cost fiber structure that has sufficient strength for use as an aircraft structural material; offers excellent matrix impregnation efficiency in a composition process; and is provided with sufficient smoothness for preventing a resin deposit that affects its strength from being formed on its surface or in its bonding plane.

### SUMMARY OF THE INVENTION

For achieving the foregoing object, a first aspect of the present invention provides a fiber base material for constituting a composite material comprising a single layer or a plurality of layers of a solid-shape base material constituted of a woven, knitted or laminated continuous fiber, wherein the base material is raised for enhancing interlaminar strength, improving permeability of a matrix into an interior portion thereof, and increasing plane smoothness to exclude a resin deposit. With such constitution, a matrix penetrates more quickly into an inner space in a composition process because of capillary action of the raised portion of threads provided in different directions in the solid-shape base material, therefore an impregnation period and a number of times of impregnation for composing a C/C (carbon/carbon) composite can be reduced, which results in improvement of impregnation efficiency and reduction of voids. Also, after an impregnation and curing process of a matrix, bonding strength between the layers or bonded planes can be increased, because of an anchor effect of the raised portion. Consequently, interlaminar strength (peeling strength, out-of-plane strength and compression after impact) of the fiber base material for constituting a composite material can be increased. (A first aspect)

A second aspect of the present invention provides a fiber base material for constituting a composite material comprising a plurality of layers including a sheet-shape base material constituted of a woven or knitted continuous fiber, or including the sheet-shape base material and the solid-shape base material, wherein the base material is raised for enhancing interlaminar strength, improving permeability of a matrix into an interior portion thereof, and increasing plane smoothness. With such constitution, a matrix penetrates more quickly into an inner space in a composition process because of capillary action of the raised portion of threads provided in different directions in the solid-shape base material, therefore an impregnation period and a number of times of impregnation can be reduced when composing a C/C composite, which results in improvement of impregnation efficiency and reduction of voids. Also, after an impregnation and curing process of a matrix, bonding strength between the layers or bonded planes can be increased, because of an anchor effect of the raised portion. Consequently, interlaminar strength (peeling strength, out-of-plane strength and compression after impact) of the fiber base material for constituting a composite material can be increased. (A second aspect)

The raising process can be carried out for example by needle-punching. In this way the raising process can be carried out through a simple operation therefore the production cost can be significantly reduced, besides a part of the in-plane base material fiber is raised and squeezed into a gap between fiber bundles or between layers, resulting in improvement of permeability of a matrix in a composing process because of an aspiring effect caused by capillary action at the raised position, increase of penetrating speed of the matrix favored by availability of the needle hole as an intruding path, and promotion of discharge and ventilation of interior air. Consequently, filling rate of a matrix in an interior space can be improved, and interlaminar strength (peeling strength, out-of-plane strength and compression after impact) of the fiber base material for constituting a composite material can be increased, by an inexpensive process. (A third aspect)

Also, a fiber web layer disposed on a surface or inside the base material is introduced into an inner portion of the solid-shape base material or the sheet-shape base material, in parallel with the raising process by needle-punching. With such constitution, when a part of the in-plane base material fiber that has been raised is squeezed into a gap between fiber bundles or between layers the fiber itself is also squeezed therein together with the raised fiber, therefore an aspiring effect caused by capillary action is further increased, and filling rate of a matrix in an interior space is also improved in a composing process. Also, an anchor effect after impregnation and curing of a matrix can be improved and interlaminar strength (peeling strength, out-of-plane strength and compression after impact) of the fiber base material for constituting a composite material can be increased. (A fourth aspect)

Also, in the fiber base material for constituting a composite material according to the present invention, the needle-punching may be applied to a border portion of a cutaway section or a hole structure of a composite material formed through resin implanting and curing, to reinforce an interface of the base materials with a raised fiber. (A fifth aspect)

Also, in the fiber base material for constituting a composite material according to the present invention, the needle-punching may be applied to a skin fiber base material and a core base material laid over each other, so that the bonding plane is reinforced with the fiber implanted into an interface of the skin fiber base material and the core base material. (A sixth aspect)

Further, in the fiber base material for constituting a composite material according to the present invention, the raised fiber formed by the needle-punching can reinforce a bonding plane in a joint structure of the composite material. (A seventh aspect)

Further, in the fiber base material for constituting a composite material according to the present invention, the needle-punching may be applied either perpendicularly or at a predetermined angle with respect to a surface of the solid-shape base material or of the sheet-shape base material. As a result of such constitution, a squeezing direction of the fiber or raised fiber of the fiber base material can be adjusted as desired, therefore interlaminar strength (peeling strength, out-of-plane strength and compression after impact) of the fiber base material for constituting a composite material can be increased. (An eighth aspect)

Still further, in the fiber base material for constituting a composite material according to the present invention, a protruding portion of a thread interlacing point on a surface of the solid-shape base material or of the sheet-shape base material may be smoothed. As a result of such constitution, unevenness of the fiber base material surface can be minimized, therefore an amount of deposited matrix can be leveled off and consequently formation of a resin-rich portion can be prevented. (A ninth aspect)

Still further, in the fiber base material for constituting a composite material according to the present invention, the smoothing of a protruding portion may be carried out by the needle-punching or grinding process. By such process, smoothing of the fiber base material surface can be easily performed, besides the fiber surface of the base material is raised and therefore impregnation efficiency of a matrix can also be improved. (A tenth aspect)

Still further, in the fiber base material for constituting a composite material according to the present invention, the raising process may be carried out by a water-jet or an air-jet process. (An eleventh aspect)

According to the constitution of the first aspect, a matrix penetrates more quickly into an inner space in a composition process because of capillary action of the raised portion of threads provided in different directions in the solid-shape base material, therefore an impregnation period and a number of times of impregnation can be reduced, which results in improvement of impregnation efficiency and reduction of voids. Also, after an impregnation and curing process of a matrix, bonding strength between the layers or bonded planes can be increased, because of an anchor effect of the raised portion. Consequently, interlaminar strength (peeling strength, out-of-plane strength and compression after impact) of the fiber base material for constituting a composite material can be increased.

According to the constitution of the second aspect, a matrix penetrates more quickly into an inner space in a composition process because of capillary action of the raised portion of threads provided in different directions in the solid-shape base material, therefore an impregnation period and a number of times of impregnation can be reduced when composing a C/C composite, which results in improvement of impregnation efficiency and reduction of voids. Also, after an impregnation and curing process of a matrix, bonding strength between the layers or bonded planes can be increased, because of an anchor effect of the raised portion. Consequently, interlaminar strength (peeling strength, out-of-plane strength and compression after impact) of the fiber base material for constituting a composite material can be increased.

According to the constitution of the third aspect, the raising process can be carried out through a simple operation, and since such process enables a mass production the production cost can be significantly reduced, besides a part of the in-plane base material fiber is raised and squeezed into a gap between fiber bundles or between layers, resulting in improvement of permeability of a matrix in a composing process because of an aspiring effect caused by capillary action at the raised position, increase of penetrating speed of the matrix favored by availability of the needle hole as an intruding path, and promotion of discharge and ventilation of interior air. Consequently, filling rate of a matrix in an interior space can be improved, and interlaminar strength (peeling strength, out-of-plane strength and compression after impact) of the fiber base material for constituting a composite material can be increased, by an inexpensive process.

According to the constitution of the fourth aspect, when a part of the in-plane base material fiber that has been raised is squeezed into a gap between fiber bundles or between layers the fiber itself is also squeezed therein together with the raised fiber, therefore an aspiring effect caused by capillary action is further increased, and filling rate of a matrix in an interior space is also improved in a composing process. Also, an anchor effect after impregnation and curing of a matrix can be improved and interlaminar strength (peeling strength, out-of-plane strength and compression after impact) of the fiber base material for constituting a composite material can be increased.

According to the constitution of the fifth aspect, by performing the needle-punching on a border portion of a cutaway section or a hole structure of a base material constituted of a single or a plurality of layers, an interface between the layered base materials is reinforced with the raised fiber, thereby increasing interlaminar strength (peeling strength, out-of-plane strength and compression after impact) at a bonding plane.

According to the constitution of the sixth aspect, by performing the needle-punching on a skin fiber base material and a core base material at a time, the fiber is implanted into an interface of the skin fiber base material and the core base material, therefore the bonding plane or the interface of the skin fiber base material and the core base material is reinforced, and consequently interlaminar strength (peeling strength, out-of-plane strength and compression after impact) of the interface can be increased.

According to the constitution of the seventh aspect, the raised fiber formed by the needle-punching applied to a single layer or a plurality of alternate layers of fiber base materials can reinforce an interface of a bonding plane, to thereby achieve sufficient strength to be used as a joint structure.

According to the constitution of the eighth aspect, by performing the needle-punching either perpendicularly or at a predetermined angle with respect to a surface of the solid-shape base material or of the sheet-shape base material, a squeezing direction of the fiber or raised fiber of the fiber base material can be adjusted as desired, therefore interlaminar strength (peeling strength, out-of-plane strength and compression after impact) can be increased.

According to the constitution of the ninth aspect, a protruding portion of a thread interlacing point on a surface of the solid-shape base material or of the sheet-shape base material is smoothed. As a result of such constitution, unevenness of the fiber base material surface can be minimized, therefore an amount of deposited matrix can be leveled off and consequently formation of a resin-rich portion can be prevented.

According to the constitution of the tenth aspect, a surface of the fiber of the base material is raised and smoothing of the fiber base material surface can be easily performed.

### BRIEF DESCRIPTION OF THE DRAWINGS

FIG. 1A schematically shows a structure of a fiber base material for constituting a composite material according to the first embodiment of the present invention;
FIG. 1B is an enlarged explanatory drawing of the structure of a fiber base material for constituting a composite material according to the first embodiment of the present invention;
FIG. 2A schematically shows a structure of a fiber base material for constituting a composite material according to the second embodiment of the present invention;
FIG. 2B is an enlarged explanatory drawing of the structure of a fiber base material for constituting a composite material according to the second embodiment of the present invention;
FIG. 3A schematically shows a structure of a fiber base material for constituting a composite material according to the third embodiment of the present invention;
FIG. 3B is an enlarged explanatory drawing of the structure of a fiber base material for constituting a composite material according to the third embodiment of the present invention;
FIG. 4 is a cross-sectional view showing a three-dimensional fiber structure according to the fourth embodiment of the present invention;
FIGS. 5A and 5B are plane views showing a three-dimensional fiber structure according to the fifth embodiment of the present invention;
FIG. 6 is a cross-sectional view of the circular hole of FIGS. 2A and 2B.
FIG. 7 is a cross-sectional view showing a three-dimensional fiber structure according to the sixth embodiment of the present invention;
FIG. 8 is a cross-sectional view showing a three-dimensional fiber structure according to the seventh embodiment of the present invention;
FIG. 9 is a cross-sectional view showing an I-shape beam constituted of the structure of FIGS. 5A and 5B.
FIGS. 10A, 10B are explanatory drawings for explaining a strength test of a fiber base material for constituting a composite material according to the present invention;
FIG. 10C is a table showing a result of the strength test of the fiber base material for constituting a composite material according to the present invention;
FIGS. 11A, 11B are explanatory drawings for explaining a strength test of a fiber base material for constituting a composite material according to the present invention;
FIG. 11C is a table showing a result of the strength test of the fiber base material for constituting a composite material according to the present invention;
FIGS. 12A, 12B are explanatory drawings for explaining a strength test of a fiber base material for constituting a composite material according to the present invention;
FIG. 12C is a table showing a result of the strength test of the fiber base material for constituting a composite material according to the present invention;
FIG. 13A is an explanatory drawing for explaining a strength test of a fiber base material for constituting a composite material according to the present invention;
FIG. 13C is a table showing a result of the strength test of the fiber base material for constituting a composite material according to the present invention;
FIGS. 14A, 14B are explanatory drawings for explaining a strength test of a fiber base material for constituting a composite material according to the present invention; and
FIG. 14C is a table showing a result of the strength test of the fiber base material for constituting a composite material according to the present invention.

### DESCRIPTION OF THE PREFERRED EMBODIMENTS

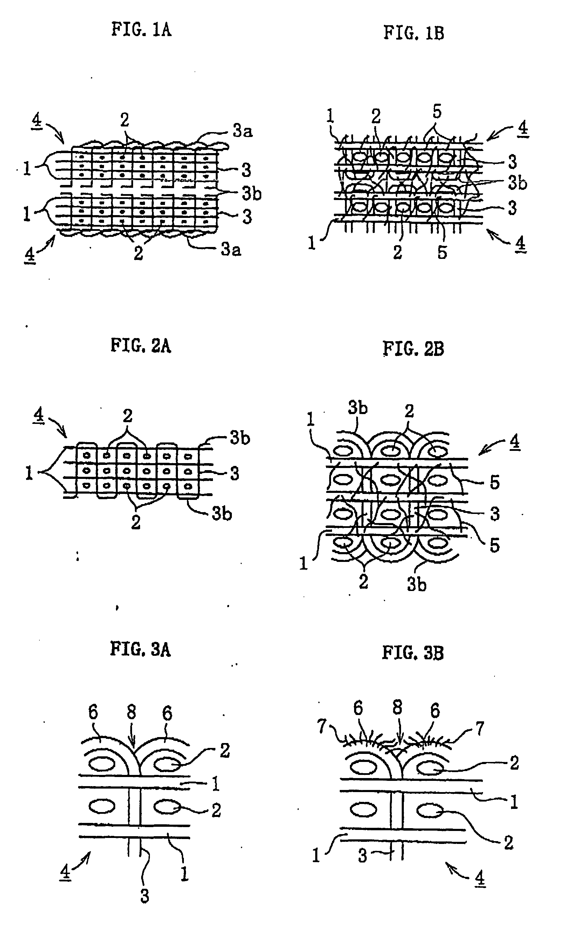

Hereunder, the embodiments of the present invention will be described referring to the accompanying drawings. FIG. 1A schematically shows a structure of a fiber base material for constituting a composite material according to the first embodiment of the present invention, and FIG. 1B is an enlarged explanatory drawing thereof. Likewise, FIG. 2A schematically shows a structure of a fiber base material for constituting a composite material according to the second embodiment of the present invention, and FIG. 2B is an enlarged explanatory drawing thereof. Also, FIG. 3A schematically shows a structure of a fiber base material for constituting a composite material according to the third embodiment of the present invention, and FIG. 3B is an enlarged explanatory drawing thereof.

The first embodiment shown in FIGS. 1A and 1B represents a structure constituted through orthogonally disposing a predetermined number of threads 1 in an X-direction and threads 2 in a Y-direction on a X-Y plane (a plane perpendicular to the page sheet showing FIGS. 1A and 1B) at a predetermined interval; laminating a plurality of such layers in a Z-direction and binding the layers with a thread 3 disposed in a Z-direction so as to form a solid-shape base material 4; and laminating two layers of the base material 4; and in this case the Z-direction thread 3 is a continuous thread provided throughout each of the solid-shape base materials 4, forming a chain stitch 3a on a front face and a back stitch 3b on a rear face thereof. Then needle-punching is applied perpendicularly or at a predetermined angle to the two layers of solid-shape base materials 4 with a hook-shaped or forked needle (not shown), so that a raised fiber 5 is formed as shown in FIG. 1B. The raised fiber 5 is formed by the scraping and raising action of the hook-shaped or forked needle on a surface of a part or an entirety of the X-direction thread 1, Y-direction thread 2 and Z-direction thread 3 located at the point where the needle has penetrated.

The second embodiment shown in FIGS. 2A and 2B represents a structure constituted through orthogonally disposing a predetermined number of threads 1 in an X-direction and threads 2 in a Y-direction on a X-Y plane (a plane perpendicular to the page sheet showing FIGS. 2A and 2B) at a predetermined interval; laminating a plurality of such layers in a Z-direction and binding the layers with a thread 3 disposed in a Z-direction so as to form a solid-shape base material 4 for using the same in a single layer; and in this case the Z-direction thread 3 is a continuous thread provided throughout the solid-shape base material 4, forming a back stitch 3b on the front and rear faces thereof. Then needle-punching is applied perpendicularly or at a predetermined angle to the two layers of solid-shape base materials 4 with a hook-shaped or forked needle (not shown), so that a raised fiber 5 is formed as shown in FIG. 2B. The raised fiber 5 is formed by the scraping and raising action of the hook-shaped or forked needle on a surface of a part or an entirety of the X-direction thread 1, Y-direction thread 2 and Z-direction thread 3 located at the point where the needle has penetrated.

The third embodiment shown in FIGS. 3A and 3B represents a solid-shape base material 4 of the first or the second embodiment, but a loop portion 6 of the Z-direction thread 3 protruding at an interlacing point on a surface of the base material 4 is needle-punched or ground, so that the thread surface is scraped and a raised fiber 7 is formed, which fills in a recess 8 thereby smoothing the surface, with an object to prevent a matrix from depositing in the recess 8 to form a resin-rich portion.

In the foregoing first to third embodiments, the needle-punching may be applied to the solid-shape base material 4 provided with a fiber web layer disposed therein, for instance in a middle layer or between the layers, or on the front face to which the needle is applied or on the rear face. In this way, the fiber can be introduced into an inner space of the solid-shape base material 4 simultaneously while raising the thread fiber.

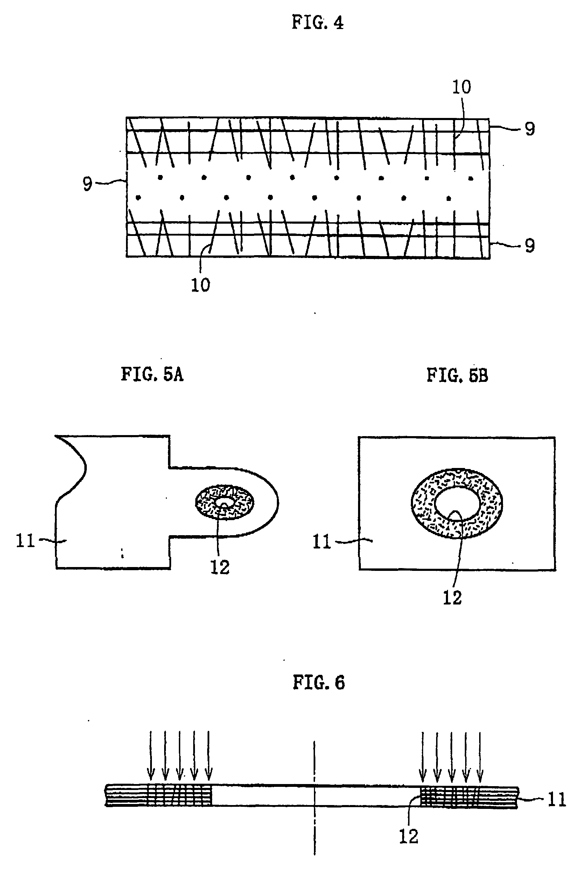

Now, FIGS. 4 through 9 show different embodiments of the present invention, among which the fourth embodiment shown in FIG. 4 is constituted of a sheet-shape core material 9 made of a material appropriate for use as a core material such as a resin or a foamed sheet, overlaid with a reinforcing fiber sheet 10 on both faces thereof, and the fiber sheets 10 are joined with the core material 9 by needle-punching in a thicknesswise direction. Because of the needle-punching, naps raised from each fiber of the fiber sheets 10 three-dimensionally penetrate into a surface layer of the core material 9, thereby enhancing peeling strength between the fiber sheets 10 and the core material 9. It is also preferable to intermittently press the fiber sheets 10 and the core material 9 with a stripper of the needle machine during the needle-punching process, because the base material is further compressed and a high-density three-dimensional fiber structure joined with the raised fiber can be obtained, without reducing fiber density of the base material.

A three-dimensional fiber structure as shown in FIG. 4 is preferably applicable to a rudder face of an aircraft, an aircraft outer panel, a main rotor blade or tail rotor blade of a helicopter, a rotor blade of a gas turbine, etc.

The fifth embodiment shown in FIGS. 5A and 5B represents a reinforcing structure provided around a circular hole 12 formed on a plate-shape fiber structure 11, achieved by needle-punching on a surface of the fiber structure in a thicknesswise direction over a predetermined width from a circumferential edge of the circular hole 12, as shown in FIG. 6. As a result of the needle-punching, naps 11 raised from each fiber of the fiber structure collaborate with each other to reinforce an interface between fibers, thus enhancing peeling strength and compression after impact of a circumferential portion of the circular hole.

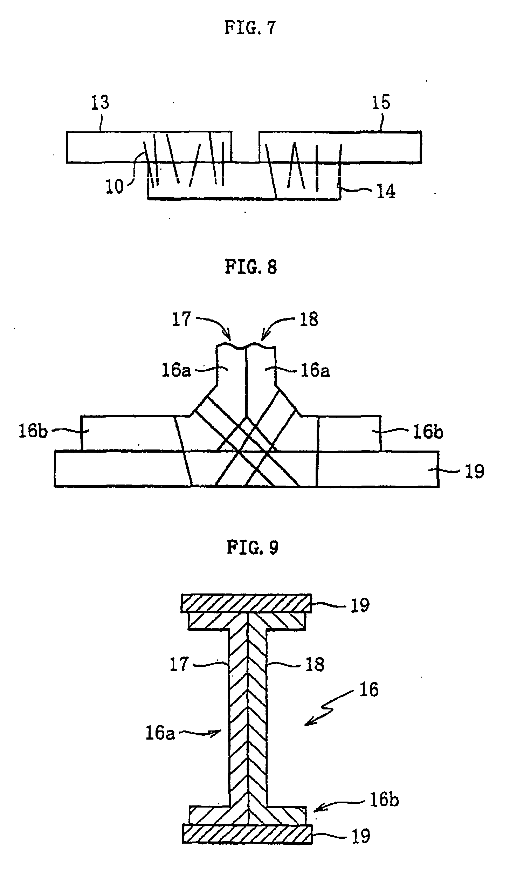

The sixth embodiment shown in FIG. 7 is constituted of three plate-shape fiber structures 13 to 15 joined to one another so as to prolong an overall length, in which needle-punching is applied to an overlapping portion of the two plate-shape fiber structures 13 and 14 and of the plate-shape fiber structures 14 and 15 in a thicknesswise direction, so that the naps 10 reinforce an interface between the plate-shape fiber structures, to thereby increase peeling strength and interlaminar strength. Such structure is effective as a reinforcing measure of a joint structure of plate-shape fiber structures.

The seventh embodiment shown in FIG. 8 represents a reinforced structure of a joint portion of a web portion 16a and a flange portion 16b of an I-shaped beam 16 constituted of a fiber structure as shown in FIG. 9, and the I-shaped beam is constituted of two fiber structures 17, 18 having a C-shaped cross-section joined back to back to form an I-shape, to which reinforcing plate-shape fiber structures 19 are respectively bonded to flange portions thereof. And an interface between the plate-shape fiber structures 19 and the flange portions of the I-shaped cross-section is reinforced by needle-punching. More specifically, the needle-punching is applied in a thicknesswise direction of the fiber structure 19 as well as in an oblique direction from inside the respective corners of the flange portion of the I-shaped cross-section such that the needle paths intersect. In this way, the needle-punching in the two directions, i.e. the thicknesswise direction and the oblique crossing directions, can prevent an interlayer crack and increase strength of the I-shaped beam. With such method, a fiber structure having a J-shaped cross-section, a hat-shaped cross-section, a reverse T-shaped cross-section etc. can be obtained, in addition to the I-shaped cross-section.

As described throughout the foregoing passages, according to the embodiments of the present invention, a needle-punching process fibrillates (raises) a fiber of the base material, and thread fibers disposed in different directions or a fiber web in the raised plane are squeezed into an interface of layers so that the layers interlace with each other, therefore interlaminar strength and out-of-plane strength are increased. Also, the raised fiber or fiber web is squeezed into a gap of the thread fibers disposed in different directions in an intersecting plane, therefore a matrix can be more easily introduced to fill the gap in a composing process, and impregnation efficiency is improved. Further, by using a tapered needle in a needle-punching process needle holes are formed, which serve as a path of a matrix so that the matrix can intrude more quickly, therefore formation of voids, which affect strength of the material, can be restrained. In addition, the matrix impregnating time can be shortened and a number of impregnation steps can be reduced.

Furthermore, in case of employing a large-diameter fiber constituted of thicker monofilament fibers or of an increased number of assembled yarns for the purpose of cost reduction, a solid-shape base material having a considerably uneven surface is formed, however raising the fiber of the loop portions, which are scarcely related with strength of the material, protruding at thread interlacing points on the material surface with a curved needle or a file (grinder) forms a flattened surface, therefore formation of a resin-rich portion, which reduces strength of the material, can be prevented in a composing process and the surface quality is improved.

The raising process of the fiber of the base material can be carried out by needle-punching in a form of a mass production, therefore the material can be manufactured at a low cost. It is preferable to execute the needle-punching in a different direction from a bundle direction determined by a binding thread, for increasing shearing strength. It is also possible to apply the needle-punching to an interface of a plurality of layered sheet-shape base materials (fabrics), or to a sheet-shape base material interleaved between solid-shape base materials (fabrics). The fiber base material, which serves as a preform may be constituted of a carbon fiber, a ceramic fiber, a glass fiber or a high-strength organic fiber, etc. For example, a glass-based, carbon-based or ceramic-based inorganic fiber, or an organic fiber such as an aramide fiber, polyester, etc. may be utilized. Referring to a matrix, a polymer, carbon, ceramic material and a metal such as aluminum can be employed. For a core material, a resin family base material or the like can be utilized. Further, a fiber base material may be constituted of a three-dimensional fabric (single or a plurality of layers), a stitched (or knitted) preform, continuous fiber layer preform (a plurality of two-dimensional or three-dimensional layers, or layers partly provided with a Z-direction thread), to which needle-punching is applied with a hook-shaped or forked needle perpendicularly or at a predetermined angle at an appropriate interval density, for example in a uniform density for fibrillating and raising the fiber surface.

Now, results of strength improvement tests of a fiber base material by needle-punching will be described. The tests were executed with respect to the following five aspects.

### 1. Peeling strength test

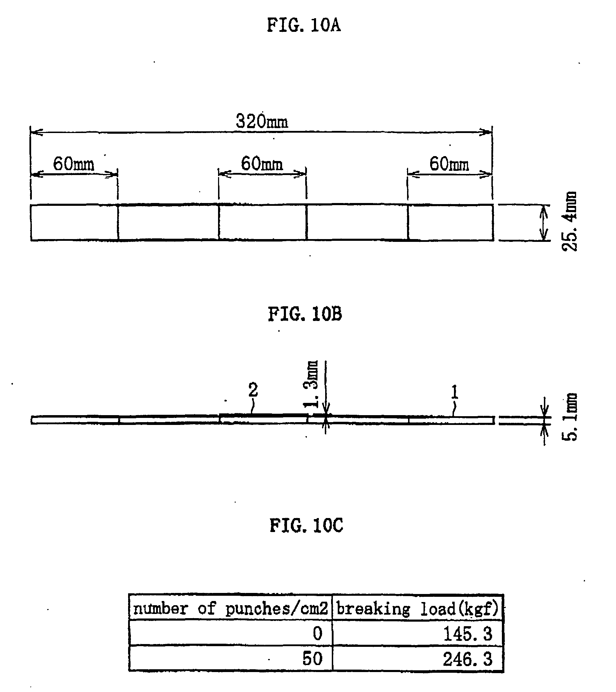

This test was performed with a base material 1, 2 constituted of quasi-isotropically laminated high-strength carbon fiber unidirectional materials of the dimensions specified in FIGS. 10A and 10B, applying needle-punching to a portion marked as 2. A high-strength epoxy resin was employed for impregnation. The test result is as shown in FIG. 10C.

### 2. Out-of-plane strength test

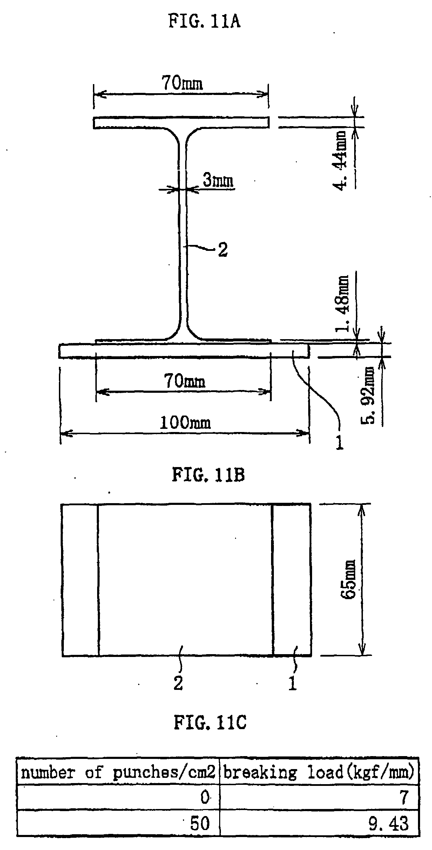

This test was performed with base materials 1, 2 constituted of quasi-isotropically laminated high-strength carbon fiber unidirectional materials of the dimensions specified in FIGS. 11A and 11B, applying needle-punching to a bonded portion of the base materials. A high-strength epoxy resin was employed for impregnation. The test result is as shown in FIG. 11C.

### 3. Compression after impact test

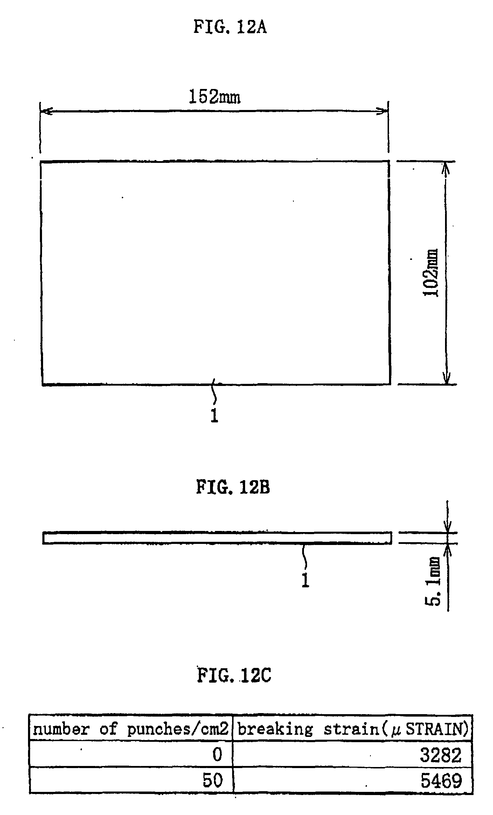

This test was performed with a base material 1 constituted of a quasi-isotropically laminated high-strength carbon fiber unidirectional material of the dimensions specified in FIGS. 12A and 12B, applying needle-punching to the same. A high-strength epoxy resin was employed for impregnation. After applying an impact to a predetermined position, a load was imposed in a compressing direction. The test result is as shown in FIG. 12C.

### 4. FEM analysis of a cutaway portion

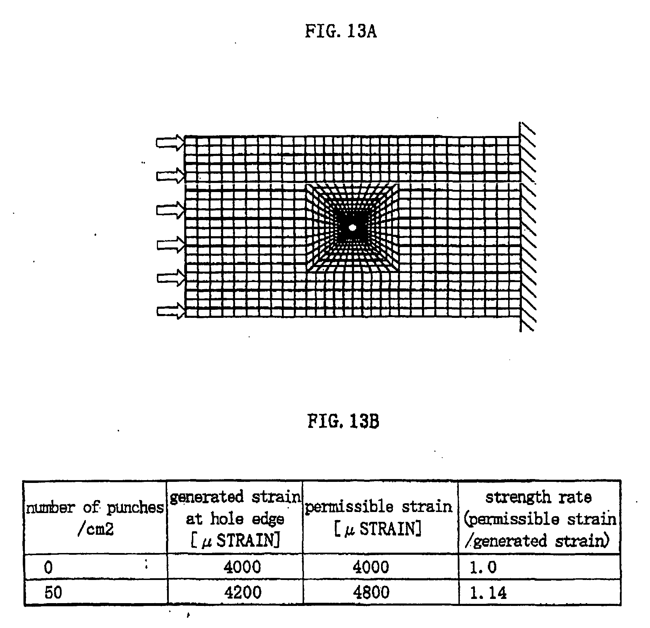

Analysis of strength was carried out with respect to a circumferential portion of an opening, setting the needle-punching characteristics as shown in FIG. 13A and applying the needle-punching to a limited region around the hole, on the supposition that a load was imposed in a compressing direction after the needle-punching. The test result is as shown in FIG. 13C.

### 5. Needling joint test

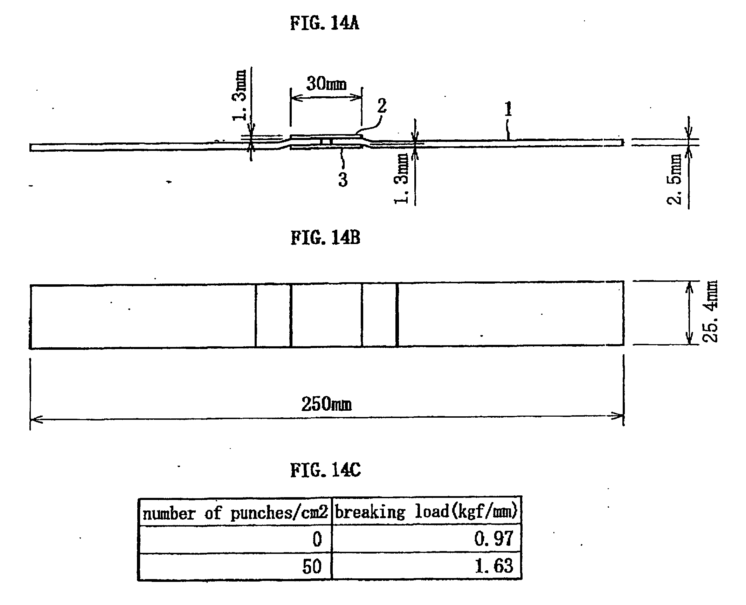

This test was performed with base materials 1, 2, 3 constituted of quasi-isotropically laminated high-strength carbon fiber unidirectional materials of the dimensions specified in FIGS. 14A and 14B, applying needle-punching to overlapping portions of the base materials. A high-strength epoxy resin was employed for impregnation. After composing, a load was imposed in a tensile direction. The test result is as shown in FIG. 14C.

## Claims

1. A fiber base material for constituting a composite material comprising a single layer or a plurality of layers of a solid-shape base material constituted of a woven, knitted or laminated continuous fiber, wherein said base material is raised for enhancing interlaminar strength, improving permeability of a matrix into an interior portion thereof, and increasing plane smoothness.

2. A fiber base material for constituting a composite material comprising a plurality of layers including a sheet-shape base material constituted of a woven or knitted continuous fiber, or including said sheet-shape base material and said solid-shape base material, wherein said base material is raised for enhancing interlaminar strength, improving permeability of a matrix into an interior portion thereof and increasing plane smoothness.

3. The fiber base material for constituting a composite material as set forth in Claim 1 or 2, wherein said raising process is carried out for example by needle-punching.

4. The fiber base material for constituting a composite material as set forth in Claim 1 or 2, wherein a staple fiber web layer disposed on a surface or inside said base material is introduced into an inner portion of said solid-shape base material or said sheet-shape base material, in parallel with said raising process by needle-punching.

5. The fiber base material for constituting a composite material as set forth in Claim 1 or 2, wherein said needle-punching is applied to a border portion of a cutout section or a hole section of a structure to which a fiber base material for constituting a composite material is applied, so that an interface of said base materials is reinforced because of interlacing of said raised fiber.

6. The fiber base material for constituting a composite material as set forth in Claim 1 or 2, wherein said needle-punching is applied to a skin fiber base material and a core base material laid over each other, so that said bonding plane is reinforced with the fiber implanted into an interface of said skin fiber base material and said core base material.

7. The fiber base material for constituting a composite material as set forth in Claim 1 or 2, wherein said raised fiber formed by said needle-punching reinforces a bonding plane in a joint structure of said composite material.

8. The fiber base material for constituting a composite material as set forth in any of Claims 3 through 7, wherein said needle-punching is applied either perpendicularly or at a predetermined angle with respect to a surface of said solid-shape base material or of said sheet-shape base material.

9. The fiber base material for constituting a composite material as set forth in Claim 1 or 2, wherein a protruding portion of a thread interlacing point on a surface of said solid-shape base material or of said sheet-shape base material is smoothed.

10. The fiber base material for constituting a composite material as set forth in Claim 9, wherein said smoothing of said protruding portion is carried out by said needle-punching or grinding process.

11. The fiber base material for constituting a composite material as set forth in Claim 1 or 2, wherein said raising process is carried out by a water-jet or an air-jet process.
